# EUROPÄISCHE PATENTSCHRIFT

(11) **EP 3 162 862 B1**
(45) Veröffentlichungstag und Bekanntmachung des Hinweises auf die Patenterteilung: **17.10.2018**
(21) Anmeldenummer: 16193996.2
(22) Anmeldetag: 13.08.2009
(51) Int. Cl.: B03C 3/00

(54) **VERFAHREN ZUM ABSCHEIDEN VON LACK-OVERSPRAY**
METHOD FOR REMOVING PAINT OVERSPRAY
DISPOSITIF DE SÉPARATION DE PULVÉRISATIONS DE LAQUE

(30) Priorität: 04.09.2008 DE 102008046409
(43) Veröffentlichungstag der Anmeldung: 03.05.2017
(62) Teilanmeldung aus: 09777846.8
(73) Patentinhaber: Eisenmann SE, 71032 Böblingen (DE)
(72) Erfinder: Dingler, Günther, 75395 Ostelsheim (DE); Hihn, Erwin, 72141 Walddorfhäslach (DE); Swoboda, Werner, 71032 Böblingen (DE); Schlipf, Michael, 73035 Göppingen (DE)
(74) Vertreter: Ostertag & Partner Patentanwälte mbB

(56) Entgegenhaltungen:
- GB-A- 2 400 052
- US-A- 5 843 337

## Beschreibung

Die Erfindung betrifft ein Verfahren zum Entfernen von Feststoffen aus beim Lackieren von Gegenständen entstehendem Overspray, bei welchem der Overspray von einem Luftstrom aufgenommen und zu einer von einer Abscheideflüssigkeit überströmten Abscheidefläche transportiert wird, wo ein Großteil zumindest der Feststoffe in die Abscheideflüssigkeit übergeht, von dieser abtransportiert und durch Abscheiden aus der Flüssigkeit entfernt wird.

Siehe hierzu Dokument GB2400052 welches die Merkmale der Präambel zeigt. Bei der manuellen oder automatischen Applikation von Lacken auf Gegenstände wird ein Teilstrom des Lackes, der im Allgemeinen sowohl Festkörper als auch Lösemittel und/oder Bindemittel enthält, nicht auf den Gegenstand appliziert. Dieser Teilstrom wird in der Fachwelt "Overspray" genannt. Der Overspray wird von dem Luftstrom in der Spritzkabine erfasst und einer Abscheidung zugeführt.
Insbesondere bei Anlagen mit größerem Lackverbrauch, beispielsweise bei Anlagen zum Lackieren von Fahrzeugkarosserien, kommen bevorzugt Nassabscheidesysteme zum Einsatz, bei denen Verfahren der eingangs genannten Art verwendet werden. Bei vom Markt her bekannten Anlagen wird als Abscheideflüssigkeit Wasser oder Öl verwendet, die intensiv mit der Kabinenabluft und dem in dieser befindlichen Overspray verwirbelt wird.
Damit die von der Abscheideflüssigkeit aufgenommenen Lackpartikel einwandfrei von der Abscheidefläche weggeführt werden können, muss die Abscheideflüssigkeit besondere Kriterien erfüllen. Zu diesen zählt beispielsweise, dass die Klebewirkung der Lackpartikel aufgehoben werden muss, damit diese, falls sie durch die Abscheideflüssigkeit hindurch mit der Abscheidefläche in Kontakt kommen, nicht an dieser haften.
Darüber hinaus muss der Dampfdruck der Abscheideflüssigkeit zumindest so niedrig sein, dass ein Mitreißen von gasförmigen Bestandteilen der Abscheideflüssigkeit durch die vorbeiströmende Kabinenabluft soweit wie möglich minimiert ist.

Damit eine möglichst gleichmäßige sowie läufer- und nasenfreie Benetzung der Abscheidefläche gewährleistet ist, muss die Oberflächenspannung der Abscheideflüssigkeit ausreichend gering sein.

Insbesondere ist es wünschenswert, dass die Abscheideflüssigkeit weitgehend laminar an der Abscheidefläche herabfließen kann, d.h. dass sich ein dünner Film auf der Abscheidefläche ausbildet, welcher gleichmäßig nach unten wandert.

Aufgabe der Erfindung ist es daher, ein Verfahren und eine Abscheideflüssigkeit der eingangs genannten Art zu schaffen, welche den obigen Gedanken Rechnung tragen und eine effektive Entfernung von Overspray aus der Kabinenluft durch die Abscheideflüssigkeit gewährleistet.

Diese Aufgabe wird im Hinblick auf das Verfahren dadurch gelöst, dass
eine Abscheideflüssigkeit verwendet wird, welche
a) als Trägerfluid Wasser umfasst;
b) ein Entklebungsmedium umfasst, wobei Lack-Overspraypartikel durch das Entklebungsmedium entklebt werden;
c) außerdem ein oder mehrere polare, wasserlösliche Lösemittel, vorzugsweise Ethylenglykol, Propylenglykol, Polyethylenglykol oder Polypropylenglykol, umfasst;
d) polares, wasserlösliches Lösemittel in einer Menge von 1 bis 60 Gew.%, vorzugsweise von 20 bis 40 Gew.%, bezogen auf das Gesamtgewicht der Abscheideflüssigkeit, umfasst;
e) außerdem ein oder mehrere Netzmittel, bevorzugt nicht ionische, anionische oder kationische Tenside, besonders bevorzugt nicht ionische Tenside, vorzugsweise Fettalkoholethoxylate, Fettalkoholpropoxylate, umfasst;
wobei
f) die Viskosität der Abscheideflüssigkeit, gemessen mit einem Auslaufbecher gemäß DIN EN ISO 2431, Deutsche Fassung EN ISO 2431:1996, aus dem Jahre 1996 mit einer Auslauföffnung von 6 mm Durchmesser, zwischen 2 und 100 Sekunden, bevorzugt zwischen 5 und 20 Sekunden und besonders bevorzugt bei 10,5 Sekunden liegt.

Es ist günstig, wenn Wasser als Trägerfluid verwendet wird.

Ein Entkleben der Lack-Overspraypartikel kann durch eine durch das Entklebungsmedium hervorgerufene Agglomeration der Lack-Overspraypartikel und/oder durch Härten des Lack-Oversprays, welches durch das Entklebungsmedium erfolgt oder beschleunigt wird, und/oder durch Aufheben einer gegebenenfalls vorliegenden Emulsion, welches durch das Entklebungsmedium herbeigeführt wird, bewirkt werden.

Erfindungsgemäß werden also die Klebeeigenschaften des Oversprays weitgehend aufgehoben, so dass die Gefahr eines Haftens von Overspray an der Abscheidefläche verringert ist.

Bei einer auf Wasser basierenden Abscheideflüssigkeit hat es sich als vorteilhaft erwiesen, wenn diese außerdem ein oder mehrere polare, wasserlösliche Lösemittel, vorzugsweise Ethylenglykol, Propylenglykol, Polyethylenglykol oder Polypropylenglykol, umfasst. Derartige Lösemittel wirken als Lösevermittler und erleichtern die Aufnahme des Lack-Oversprays von der Abscheideflüssigkeit.

Dabei hat es sich insbesondere als günstig erwiesen, wenn die Abscheideflüssigkeit polares, wasserlösliches Lösemittel in einer Menge von 1 bis 60 Gew.%, vorzugsweise von 20 bis 40 Gew.%, bezogen auf das Gesamtgewicht der Abscheideflüssigkeit, umfasst.

Die Aufnahme von Lack-Overspraypartikeln wurde bei einer auf Wasser basierenden Abscheideflüssigkeit verbessert, wenn diese außerdem ein oder mehrere Netzmittel, bevorzugt nicht ionische, anionische oder kationische Tenside, besonders bevorzugt nicht ionische Tenside, vorzugsweise Fettalkoholethoxylate, Fettalkoholpropoxylate, umfasst.

Über die Netzmittel kann die Oberflächenspannung der Abscheideflüssigkeit und deren Haftungs- und Fließverhalten an der Abscheidefläche eingestellt werden.

Es ist günstig, wenn die Viskosität der Abscheideflüssigkeit, gemessen mit einem Auslaufbecher gemäß DIN EN ISO 2431, Deutsche Fassung EN ISO 2431:1996, aus dem Jahre 1996 mit einer Auslauföffnung von 6 mm Durchmesser, zwischen 2 und 100 Sekunden, bevorzugt zwischen 5 und 20 Sekunden und besonders bevorzugt bei 10,5 Sekunden liegt.

Es hat sich als vorteilhaft herausgestellt, wenn das Entklebungsmedium ein Entklebungsmedium auf der Basis von Silicaten ist, vorzugsweise von Schichtsilicaten, Bentoniten, Sepiolithen, Tonerden; auf der Basis von Aluminiumsalzen, vorzugsweise von Aluminiumsalzen, welche bei neutralen und alkalischen pH-Werten Hydroxide bilden, vorzugsweise Aluminiumsulfat, Aluminiumchlorid, Aluminiumnitrat; auf der Basis von Zinksalzen, vorzugsweise von Zinksalzen, welche bei neutralen und alkalischen pH-Werten Hydroxide bilden, vorzugsweise Zinkchlorid, Zinksulfat; auf der Basis von Eisensalzen, vorzugsweise von Eisensalzen, welche bei neutralen und alkalischen pH-Werten Hydroxide bilden, vorzugsweise Eisenchlorid, Eisensulfat; auf der Basis von Calciumsalzen, vorzugsweise Calciumchlorid, Calciumnitrat, Calciumacetat; auf der Basis von Zirkoniumsalzen, vorzugsweise Zirkoniumchlorid, Zirkoniumacetat; auf der Basis von Polymeren, vorzugsweise von Polyacrylamiden, Polymethacrylamiden oder Melamin/Formaldehyd-Kondensationsprodukten; oder auf der Basis von Aminen, vorzugsweise von Diaminen, vorzugsweise von 2-Methylpentamethylendiamin, Ethylendiamin.

Abhängig davon, ob der abzuscheidende Overspray auf einem wasserverdünnbaren Lack oder einem Lösemittellack beruht, wirken die genannten Entklebungsmedien als Agglomerationsmittel, als Härterbeschleuniger oder als Emulsionsspaltmittel.

Mit Abscheideflüssigkeiten, welche das Entklebungsmedium in einer Menge von 0,1 bis 20 Gew.%, bevorzugt von 1 bis 5 Gew.%, bezogen auf das Gesamtgewicht der Abscheideflüssigkeit, umfassen, konnten gute Ergebnisse erzielt werden.

Es ist günstig, wenn die Abscheideflüssigkeit Netzmittel in einer Menge von 0,1 bis 5 Gew.%, bezogen auf das Gesamtgewicht der Abscheideflüssigkeit, umfasst.

Eine auf Wasser basierende Abscheideflüssigkeit mit höherer Viskosität kann hergestellt werden, wenn diese außerdem Verdickungsmittel, bevorzugt Cellulose, Carboxymethylcellulose, Methylethylcellulose, Hydroxypropylcellulose, Hydroxypropylethylcellulose, Polyysaccharide, Gummi arrabicum, Xanthan oder modifizierte Stärke, besonders bevorzugt Carboxymethylcellulose, umfasst. Dabei ist es vorteilhaft, wenn die Abscheideflüssigkeit Verdickungsmittel in einer Menge von 0,1 bis 5 Gew.%, bevorzugt von 0,1 bis 1 Gew.%, bezogen auf das Gesamtgewicht der Abscheideflüssigkeit, umfasst.

Eine viskose Abscheideflüssigkeit fließt langsamer, so dass ein bestimmtes Volumen dieser Abscheideflüssigkeit länger mit der mit Overspray beladenen Kabinenluft in Kontakt ist und einen größeren Anteil Overspray aufnehmen kann, als ein gleich großes Volumen einer dünnflüssigeren Abscheideflüssigkeit.

Um die Lagerfähigkeit der auf Wasser basierenden Abscheideflüssigkeit zu erhöhen, ist es günstig, wenn diese außerdem Konservierungsmittel, vorzugsweise Isothiazoline; quarternäre Ammoniumverbindungen, bevorzugt Didecyldiammoniumchlorid, Dioctyldiammoniumchlorid; Dimethyloldimethylhydantoin; Bromochlorodimethylhydantoin oder Bisoxazolidin; vorzugsweise in einer Menge von 0,5 bis 10 Gew.%, bezogen auf das Gesamtgewicht der Abscheideflüssigkeit, umfasst.

Besonders gute Abscheideergebnisse werden erzielt, wenn die Abscheideflüssigkeit elektrisch leitend ist und Lack-Overspray mittels einer Elektrodeneinrichtung ionisiert und an der Abscheidefläche abgeschieden wird, indem die Elektrodeneinrichtung mit dem ersten Pol einer Hochspannungsquelle und die Abscheidefläche mit dem zweiten Pol der Hochspannungsquelle verbunden ist.

Das Verhältnis von Entklebungsmedium zu Trägerfluid in der Abscheideflüssigkeit kann individuell an die Art des Oversprays angepasst werden, wenn das Trägerfluid und das Entklebungsmedium einem Vorlagebehälter unabhängig voneinander zugeführt werden.

Aus umwelttechnischer Sicht ist es besonders vorteilhaft, wenn die mit Lack-Overspray beladene Abscheideflüssigkeit wiederaufbereitet und wiederverwendet wird.

Die Wiederaufbereitung kann vorteilhaft durch wenigstens eine Filterstufe umfassendes Filtern erfolgen.

Es ist günstig, wenn die Viskosität der der Abscheidefläche zugeführten Abscheideflüssigkeit gemessen wird. Gegebenenfalls kann die Viskosität der Abscheideflüssigkeit durch Zugabe von Einzelkomponenten korrigiert werden.

Ausführungsbeispiele der Erfindung werden nachfolgend anhand der Zeichnung näher erläutert. In dieser zeigen:
- Figur 1: eine Lackierkabine einer Oberflächenbehandlungsanlage mit einem ersten Ausführungsbeispiel einer Overspray-Abscheidevorrichtung in einer Vorderansicht;
- Figur 2: die Lackierkabine von Figur 1 in einer perspektivischen Ansicht;
- Figur 3: eine perspektivische Ansicht zweier Abscheideeinheiten sowie dreier Elektrodeneinrichtungen der Abscheidevorrichtung von Figur 1;
- Figur 4 d: die beiden Abscheideeinheiten mit Elektrodeneinrichtungen von Figur 3 im vertikalen Schnitt;
- Figur 5: eine perspektivische Ansicht zweier Abscheideeinheiten sowie dreier Elektrodeneinrichtungen jeweils gemäß einem zweiten Ausführungsbeispiel;
- Figur 6: eine perspektivische Ansicht eines zweiten Ausführungsbeispiels einer Overspray-Abscheidevorrichtung, welche mehrere Abscheideeinheiten und Elektrodeneinrichtungen nach Figur 5 umfasst;
- Figur 7: ein Schaubild einer Anlage zur Zuführung einer Abscheideflüssigkeit zu Abscheideeinheiten.

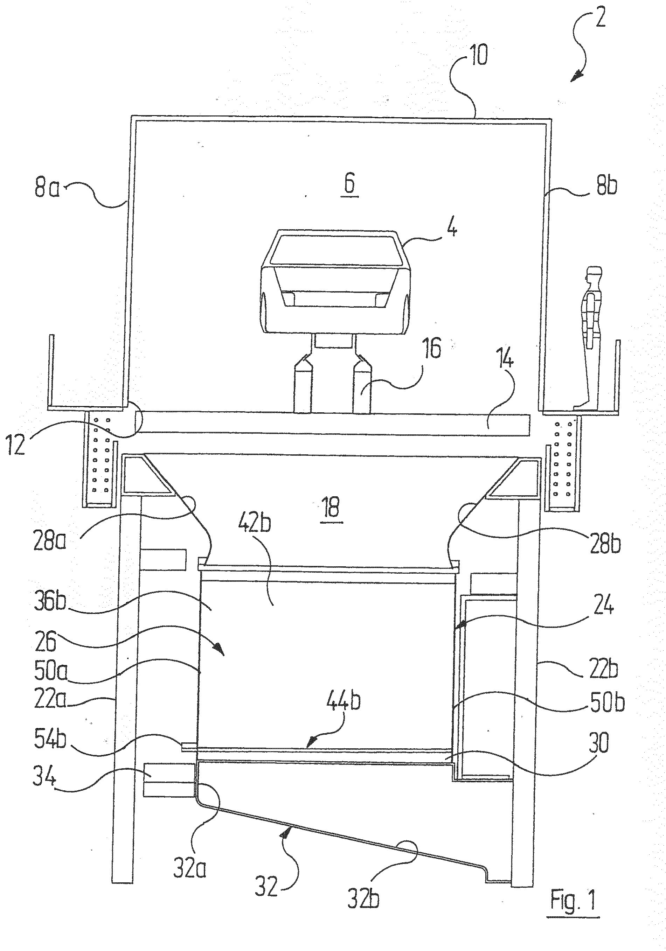

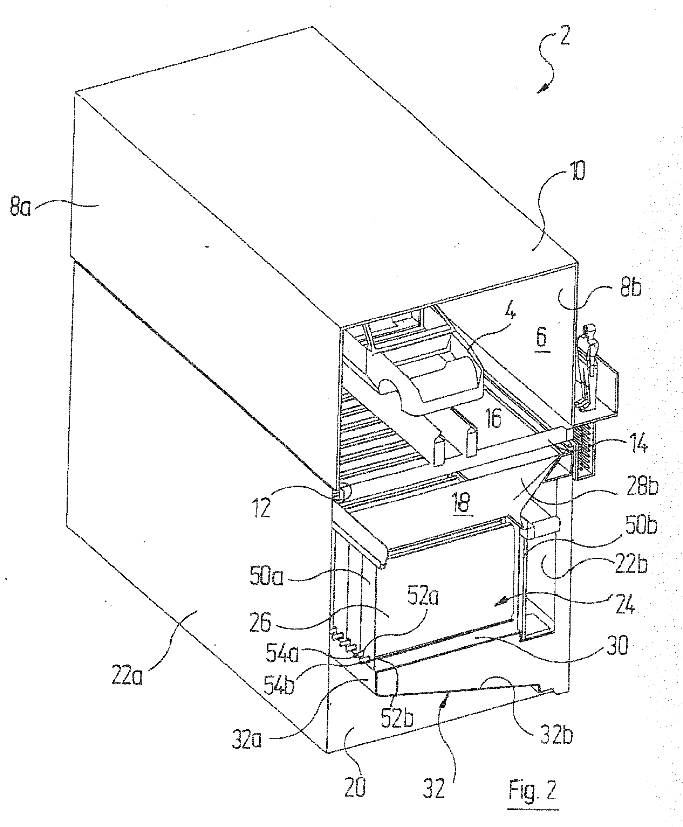

Zunächst wird auf die Figuren 1 und 2 Bezug genommen. Dort ist mit 2 insgesamt eine Lackierkabine einer Oberflächenbehandlungsanlage bezeichnet, in welcher Fahrzeugkarosserien 4 lackiert werden, nachdem sie in der Lackierkabine 2 vorgelagerten, nicht eigens gezeigten Vorbehandlungsstationen z.B. gereinigt und entfettet wurden.

Die Lackierkabine 2 umfasst einen oben angeordneten Lackiertunnel 6, welcher von vertikalen Seitenwänden 8a, 8b und einer horizontalen Kabinendecke 10 begrenzt, jedoch an den Stirnseiten und nach unten hin in der Weise offen ist, dass mit Overspray beladene Kabinenabluft nach unten strömen kann. Die Kabinendecke 10 ist in üblicher Weise als untere Begrenzung des Luftzuführraumes (nicht dargestellt) mit Filterdecke ausgebildet.

Auf Höhe der von den unteren Rändern der Seitenwände 8a, 8b flankierten unteren Öffnung 12 des Lackiertunnels 6 ist ein Stahlbau 14 angeordnet, welcher ein an und für sich bekanntes Fördersystem 16 trägt, auf welches hier nicht näher eingegangen wird. Mit diesem können zu lackierende Fahrzeugkarosserien 4 von der Eingangsseite des Lackiertunnels 6 zu dessen Ausgangsseite transportiert werden. Im Inneren des Lackiertunnels 6 befinden sich nicht eigens gezeigte Applikationseinrichtungen, mittels welcher die Fahrzeugkarosserien 4 in an und für sich bekannter Weise mit Lack beaufschlagt werden können.

Unterhalb der unteren Öffnung 12 des Lackiertunnels 6 befindet sich ein nach oben zum Lackiertunnel 6 hin offener Abscheideraum 18, in welchem beim Lackiervorgang entstehender Lack-Overspray abgeschieden wird.

Der Abscheideraum 18 ist durch eine in Figur 2 zu erkennende Bodenplatte 20, zwei vertikale Seitenwände 22a, 22b und zwei vertikale Stirnwände begrenzt, wobei die beiden letzteren in den Figuren 1 und 2 weggelassen sind. In dem Abscheideraum 18 ist eine Abscheidevorrichtung 24 mit einer Vielzahl von in Längsrichtung des Abscheideraums 18 hintereinander angeordneten Abscheideeinheiten 26 angeordnet, auf welche weiter unten noch näher eingegangen wird.

In dem Bereich des Abscheideraums 18 zwischen der Abscheidevorrichtung 24 und dem Lackiertunnel 6 befinden sich zwei Luftleitbleche 28a, 28b, welche ausgehend von den Seitenwänden 22a, 22b des Abscheideraums 18 zunächst nach unten konvergieren und in ihrem der Abscheidevorrichtung 24 zugewandten Endbereich zu den seitlichen Begrenzungen der Abscheidevorrichtung 24 divergieren. Die Luftleitbleche 28a, 28b und entsprechende, nicht dargestellte Luftleitbleche an den Stirnseiten erstrecken sich von oben bis zur Abscheidevorrichtung 24.

Die Abscheideeinheiten 26 ruhen auf einem Tragrahmen 30, welcher ein Strömen von Luft nach unten aus der Abscheidevorrichtung 24 hinaus zulässt. Unterhalb der Abscheidevorrichtung 24 befindet sich ein weiteres Luftleitblech 32, welches sich entlang der Abscheidevorrichtung 24 im Abscheideraum 18 erstreckt. Das Luftleitblech 32 weist einen vertikalen Abschnitt 32a auf, welcher der in den Figuren 1 und 2 linken Seitenwand 22a des Abscheideraums 18 zugewandt ist, und einen schräg nach unten in Richtung auf die gegenüberliegende Seitenwand 22b des Abscheideraums 18 verlaufenden Abschnitt 32b. Zwischen dem vertikalen Abschnitt 32a des Luftleitblechs 32 und der in den Figuren 1 und 2 linken Seitenwand 22a des Abscheideraums 18 ist eine nur in Figur 1 schematisch dargestellte Sammelrinne 34 angeordnet, welche sich parallel zu dem vertikalen Abschnitt 32a des Luftleitblechs 32 erstreckt und welche in Längsrichtung gegenüber einer horizontalen Ebene geneigt ist.

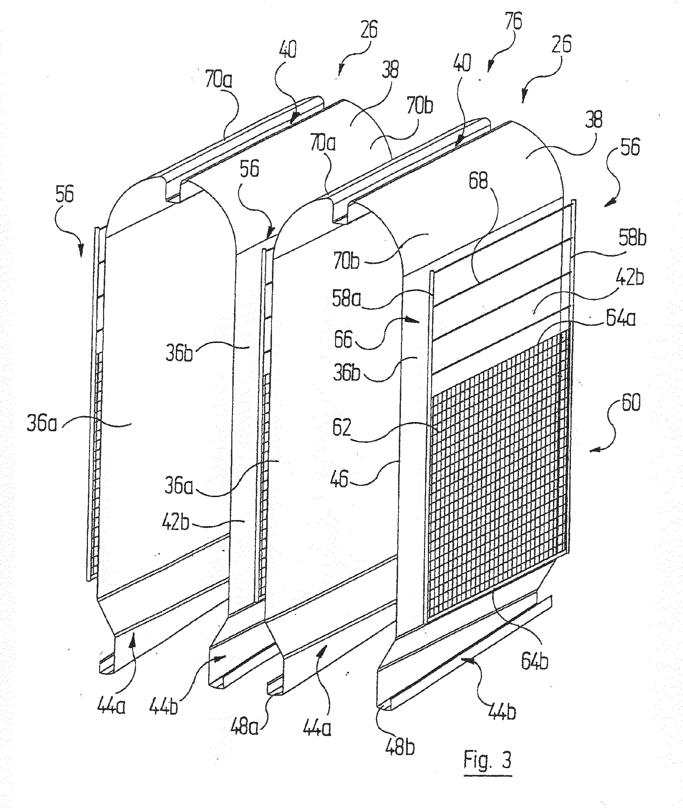

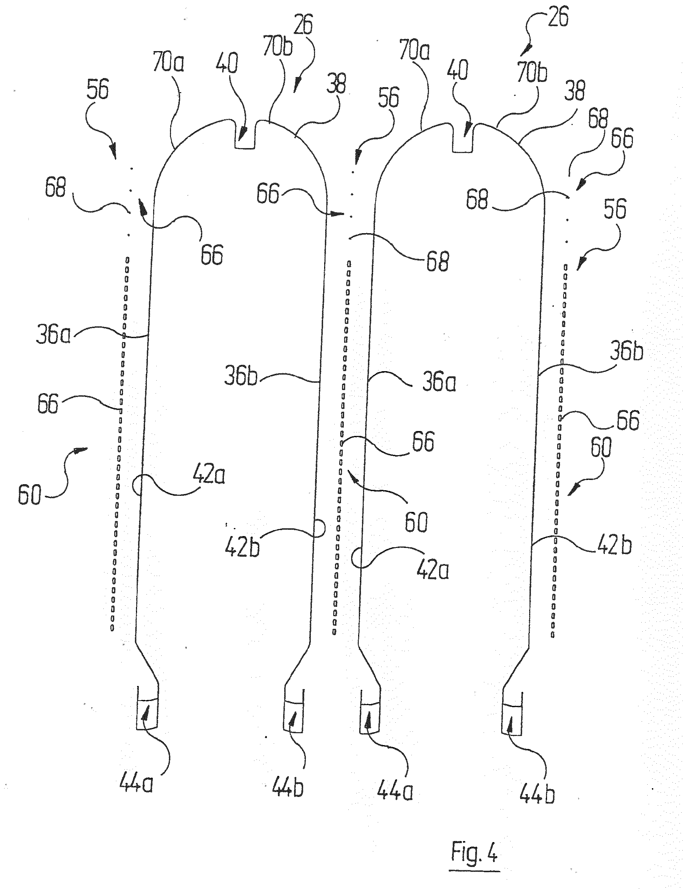

In den Figuren 3 und 4 sind zwei benachbarte Abscheideeinheiten 26 der Abscheidevorrichtung 24 gezeigt. Wie dort zu erkennen ist, umfasst eine Abscheideeinheit 26 zwei voneinander beabstandete parallele rechteckige Seitenplatten 36a, 36b, welche an ihren oberen gegenüberliegenden Stirnrändern über einen gekrümmten Abschnitt 38 miteinander verbunden sind, dessen lichte Außenkontur im Querschnitt einem Halbkreis entspricht und die Oberseite der Abscheideeinheit 26 bildet.

Am Scheitelpunkt des gekrümmten Abschnitts 38 der Abscheideeinheiten 26 ist dieser zu einer Überlaufrinne 40 ausgebildet, worauf nachstehend noch näher eingegangen wird.

Die jeweiligen Außenflächen der Seitenplatten 36a, 36b bilden Abscheideflächen 42a bzw. 42b, worauf ebenfalls weiter unten nochmals eingegangen wird.

An ihren unteren Ränder tragen die Seitenplatten 36a, 36b jeweils eine Ablaufrinne 44a, 44b, welche parallel zu den Seitenplatten 36a, 36b der Abscheideeinheiten 26 verläuft und in Richtung einer ersten, in Figur 3 vorderen Stirnseite 46 der Abscheideeinheit 26 nach unten geneigt ist. Die Ablaufrinnen 44a, 44b schließen stirnseitig mit den Seitenplatten 36a, 36b der Abscheideeinheit 26 ab (vgl. Figur 3). Die Ablaufrinnen 44a, 44b sind an ihrem Ende 48a bzw. 48b an der ersten Stirnseite 46 (vgl. Figur 3) der Abscheideeinheit 26 offen.

Wie in den Figuren 1 und 2 zu erkennen ist, umfasst jede Abscheideeinheit 26 eine erste Stirnwand 50a, welche auf deren erster Stirnseite 46 angeordnet ist. Die gegenüberliegende Stirnseite der Abscheideeinheiten 26, welche nicht eigens mit einem Bezugszeichen versehen ist, ist von einer zweiten Stirnwand 50b abgedeckt. Die Stirnwände 50a, 50b der Abscheideinheiten 26 verschließen die Stirnseiten der zugehörigen Überlaufrinne 40. Die beiden Stirnwände 50a, 50b sind aus Kunststoff gefertigt. Die erste Stirnwand 50a der Abscheideeinheit 26 umfasst zwei Durchbrüche 52a, 52b, in welche jeweils eine Ablaufrinne 44a, 44b mit ihren Enden 48a, 48b mündet. Auf der den Ablaufrinnen 44a, 44b gegenüberliegenden Seite jeder Stirnwand 50a sind an die Durchbrüche 52a, 52b Abtropfbleche 54a, 54b angesetzt. Diese sind als Profil ausgebildet, dessen Querschnitt demjenigen der Ablaufrinnen 44a, 44b entspricht.

Wenn die Abscheidevorrichtung 24 im Abscheideraum 18 der Lackierkabine 2 angeordnet ist, ragen die Abtropfbleche 54a, 54b jeder Abscheideeinheit 26 über die Sammelrinne 34.

In der Abscheidevorrichtung 24 sind jeweils zwei benachbarte Abscheideeinheiten 26 unter Einhaltung eines Abstands voneinander angeordnet. Zwischen zwei benachbarten Abscheideeinheiten 26 sowie bei den freien Seitenplatten 36a bzw. 36b der beiden äußersten Abscheideeinheiten 26 innerhalb der Abscheidevorrichtung 24 erstreckt sich jeweils eine Elektrodeneinrichtung 56, von denen jede mit einer Hochspannungsquelle verbunden ist, die in Figur 4 nicht eigens gezeigt ist. In einer Abwandlung können die Elektrodeneinrichtungen 56 auch von einer einzigen Hochspannungsquelle gespeist werden. Die Abscheideeinheiten 26 sind auf Massepotential gelegt.

Jede Elektrodeneinrichtung 56 umfasst zwei gerade, parallel zueinander verlaufende Elektrodenleisten 58a, 58b. Diese halten in einem Feldabschnitt 60 der Elektrodeneinrichtung 56 eine Gitterelektrode 62, deren zwischen den Elektrodenleisten 58a, 58b verlaufende Ränder 64a, 64b senkrecht zu diesen stehen. In einem Koronaabschnitt 66 der Elektrodeneinrichtung 56 halten die Elektrodenleisten 58a, 58b mehrere als Sprühelektrode wirkende Koronadrähte 68. Die Koronadrähte 68 verlaufen in einer durch die Elektrodenleisten 58a, 58b vorgegebenen Ebene parallel zu den Rändern 64a, 64b der Gitterelektrode 62 und sind in gleichen Abständen zueinander angeordnet.

Wie in den Figuren 3 und 4 zu erkennen ist, haben die Elektrodeneinrichtungen 56 insgesamt eine Erstreckung, welche im Wesentlichen der Erstreckung der Seitenplatten 36a, 36b der Abscheideeinheiten 26 entspricht. Die Elektrodeneinrichtungen 56 sind so angeordnet, dass der untere Rand 64b der Gitterelektrode 62 etwa auf Höhe des unteren Endes der Seitenplatten 36a bzw. 36b angeordnet ist.

Im Betrieb der Abscheidevorrichtung 24 fließt an der jeweiligen Abscheidefläche 42a, 42b der Seitenplatten 36a, 36b der Abscheideeinheiten 26 von oben nach unten eine Abscheideflüssigkeit in die Ablaufrinnen 44a, 44b, welche geeignet ist, Feststoffpartikel aus dem beim Lackiervorgang entstehenden Lack-Overspray aufzunehmen.

Dazu wird diese Abscheideflüssigkeit der Überlaufrinne 40 im gekrümmten Abschnitt 38 der Abscheideeinheiten 26 zugeführt. Von dort gelangt die Abscheideflüssigkeit über die neben der Überlaufrinne 40 verlaufenden gekrümmten Flanken 70a, 70b des gekrümmten Abschnitts 38 der Abscheideeinheit 26 jeweils als zusammenhängende Schicht zu den Seitenplatten 36a, 36b und fließt an deren Abscheideflächen 42a, 42b als weiterhin zusammenhängende Abscheideflüssigkeitsschicht herab.

Die Anzahl der Koronadrähte 68 der Elektrodeneinrichtung 56 und deren Abstand voneinander kann abhängig von dem Abscheideverhalten der Overspraypartikel variieren. Beim vorliegenden Ausführungsbeispiel sind vier Koronadrähte 68 vorgesehen, von denen der oberste neben dem gekrümmten Abschnitt 38 der Abscheideeinheit 26 angeordnet ist, wogegen der darunter liegende Koronadraht 68 sich noch im Bereich neben derjeweiligen Seitenplatte 36a bzw. 36b der Abscheideeinheit 26 befindet.

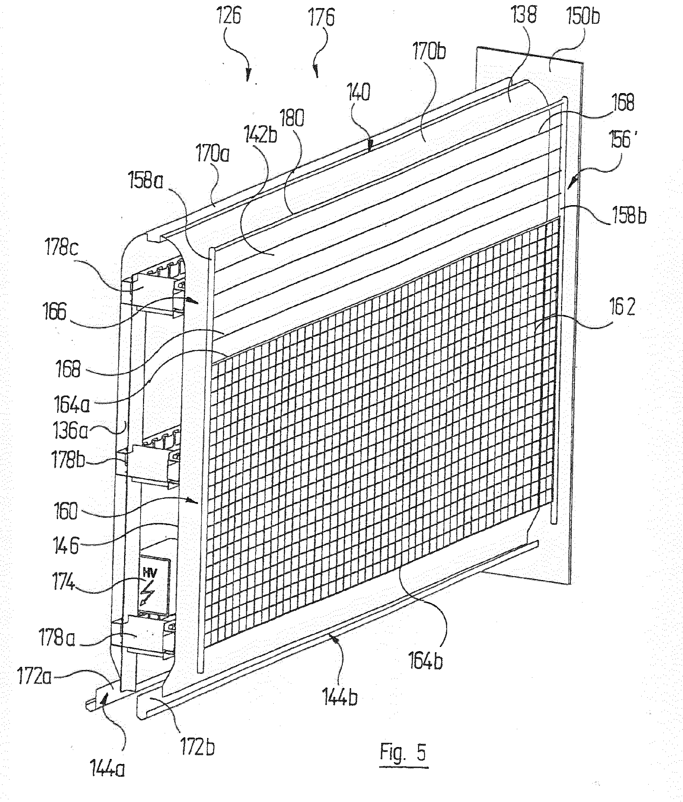

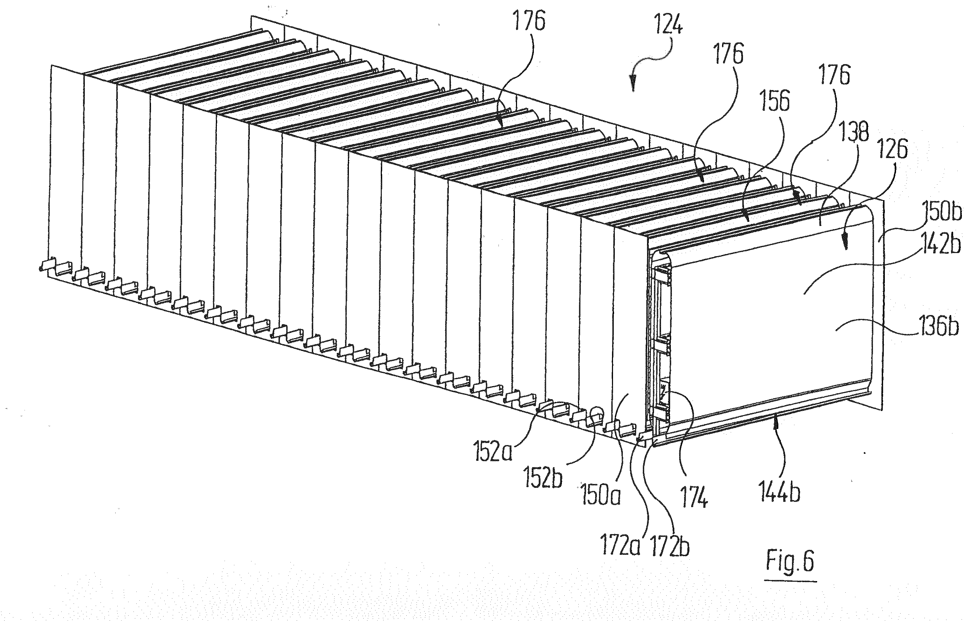

In Figur 5 sind als jeweils zweites Ausführungsbeispiel eine abgewandelte Abscheideeinheit 126 sowie eine abgewandelte Elektrodeneinrichtung 156 und in Figur 6 eine diese umfassende abgewandelte Abscheidevorrichtung 124 gezeigt. Komponenten der Abscheideeinheit 126, der Elektrodeneinrichtung 156 und der Abscheidevorrichtung 124, welche denjenigen der Abscheideeinheit 26, der Elektrodeneinrichtung 56 und der Abscheidevorrichtung 24 nach den Figuren 1 bis 4 entsprechen, sind mit denselben Bezugszeichen zuzüglich 100 gekennzeichnet.

Die Abscheideeinheit 126 unterscheidet sich von der Abscheideeinheit 26 unter anderem dadurch, dass die Ablaufrinnen 144a, 144b über die Stirnseite 146 der Abscheideeinheit 126 überstehen. Die überstehenden Abschnitte 172a, 172b entsprechen den oben erläuterten Abtropfblechen 54a, 54b, auf welche daher bei der Abscheidevorrichtung 124 verzichtet werden kann.

Wie in Figur 6 zu erkennen ist, erstrecken sich die überstehenden Abschnitte 172a, 172b der Ablaufrinnen 144a, 144b der Abscheideeinheit 126 durch die jeweiligen Durchbrüche 152a, 152b in jeder Stirnwand 150a der Abscheidevorrichtung 124 hindurch.

In Figur 5 ist eine Hochspannungsquelle 174 gezeigt, welche zwischen den Seitenplatten 136a, 136b einer jeden Abscheideeinheit 126 angeordnet ist und mit der Elektrodeneinrichtung 156 verbunden ist. In entsprechender Weise kann die Hochspannungsquelle 174 auch bei jeder Abscheideinheit 26 gemäß dem ersten Ausführungsbeispiel vorhanden sein. Jeweils eine einzelne Abscheideeinheit 126 und eine einzelne Elektrodeneinrichtung 156 bilden so ein Abscheidemodul 176. Entsprechend bilden auch jeweils eine einzelne Abscheideeinheit 26 und eine einzelne Elektrodeneinrichtung 56 nach den Figuren 1 bis 4 ein Abscheidemodul 76. In Figur 5 sind außerdem Verstrebungen 178a, 178b, 178c zu erkennen, welche die Innenflächen der beiden Seitenplatten 136a, 136b der Abscheideeinheit 126 unten, in der Mitte und oben miteinander verbinden.

Bei der Elektrodeneinrichtung 156 gemäß dem zweiten Ausführungsbeispiel verläuft senkrecht zwischen den Elektrodenleisten 158a, 158b oberhalb des obersten Koronadrahts 168 eine Schutzstange 180, durch welche die Gefahr eines Kontakts von möglicherweise aus dem Lackiertunnel 6 auf die Elektrodeneinrichtung 156 herunterfallenden Gegenständen oder Partikeln mit den Koronadrähten 168 verringert wird.

Ansonsten gilt das oben zu der Abscheideeinheit 26, der Elektrodeneinrichtung 56 und zur Abscheidevorrichtung 24 Gesagte für die Abscheideeinheit 126, die Elektrodeneinrichtung 156 und die Abscheidevorrichtung 124 sinngemäß entsprechend.

Das Grundprinzip der oben erläuterten Vorrichtungen wird nun am Beispiel der Abscheidevorrichtung 24 nach den Figuren 1 bis 4 erläutert. Die Verwendung der Abscheidevorrichtung 124 gemäß den Figuren 5 und 6 in der Lackierkabine 2 erfolgt analog.

Beim Lackieren der Fahrzeugkarosserien im Lackiertunnel 6 wird die dort befindliche Kabinenluft mit Lack-Overspraypartikeln beladen. Diese können noch flüssig und/oder klebrig aber auch schon mehr oder weniger fest sein. Die mit Lack-Overspray beladene Kabinenabluft strömt durch die untere Öffnung 12 des Lackiertunnels 6 in den Abscheideraum 18. Dort wird diese Luft durch die Luftleitbleche 28a, 28b in Richtung auf die Abscheidevorrichtung 24 gelenkt und strömt zwischen benachbarten Abscheideeinheiten 26 hindurch in Richtung auf das untere Luftleitblech 32.

An den Koronadrähten 68 kommt es in an und für sich bekannter Weise zu Koronaentladungen, durch welche die Overspraypartikel in der vorbeiströmenden Kabinenabluft effektiv ionisiert werden.

Die ionisierten Overspraypartikel passieren die auf Massepotential liegenden Seitenplatten 36a, 36b zweier benachbarter Abscheideeinheiten 26 und die dazwischen verlaufende Gitterelektrode 62 im ersten Abschnitt 60 der Elektrodeneinrichtung 56. Auf Grund des zwischen Gitterelektrode 62 und Seitenplatten 32a, 32b ausgebildeten elektrischen Feldes scheiden sich die ionisierten Overspraypartikel an Abscheideflächen 42a, 42b der Seitenplatten 36a, 36b der Abscheideeinheiten 26 ab und werden dort von der daran entlang fließenden Abscheideflüssigkeit aufgenommen.

Ein Teil der ionisierten Overspraypartikel scheidet sich bereits im zweiten Abschnitt 66 der Elektrodeneinrichtung 56 im Bereich der Koronadrähte 68 an den Abscheideeinheiten 26 ab. Das zwischen den Koronadrähten 68 und der jeweiligen Seitenplatte 36a, 36b der Abscheideeinheit 26 vorhandene elektrische Feld ist jedoch inhomogener als das elektrische Feld im Bereich der Gitterelektrode 62, weshalb dort ein gerichteteres und effektiveres Abscheiden der ionisierten Overspraypartikel an der entsprechenden Abscheideeinheit 26 erfolgt.

Die beim Durchgang zwischen den Abscheideeinheiten 26 gereinigte Luft wird von dem unteren Luftleitblech 32 in Richtung auf die in den Figuren 1 und 2 rechts gezeigte Seitenwand 22b des Abscheideraums 18 geleitet, von wo sie, gegebenenfalls nach einer gewissen Konditionierung, dem Lackiertunnel 6 wieder als Frischluft zugeführt werden kann. Bei der Konditionierung kann es sich insbesondere um ein Nachregeln der Temperatur, der Luftfeuchte und gegebenenfalls um das Entfernen von noch in der Luft befindlichen Lösemitteln handeln.

Die an den Abscheideeinheiten 26 herabfließende und nun mit den Overspraypartikeln beladene Abscheideflüssigkeit gelangt unten in die Ablaufrinnen 44a, 44b der Abscheideeinheiten 26. Durch die Neigung der Ablaufrinnen 44a, 44b fließt die beladene Abscheideflüssigkeit in Richtung auf die Durchbrüche 52a, 52b in den jeweiligen Stirnwänden 50a, durch diese hindurch und von dort über die Abtropfbleche 54a, 54b in die Sammelrinne 34. Über die Sammelrinne 34 fließt die mit Overspraypartikeln beladene Abscheideflüssigkeit aus der Lackierkabine 2 heraus und kann einer Reinigung und Wiederaufbereitung, bei welcher die Abscheideflüssigkeit von den Overspraypartikeln befreit wird, oder einer Entsorgung zugeführt werden.

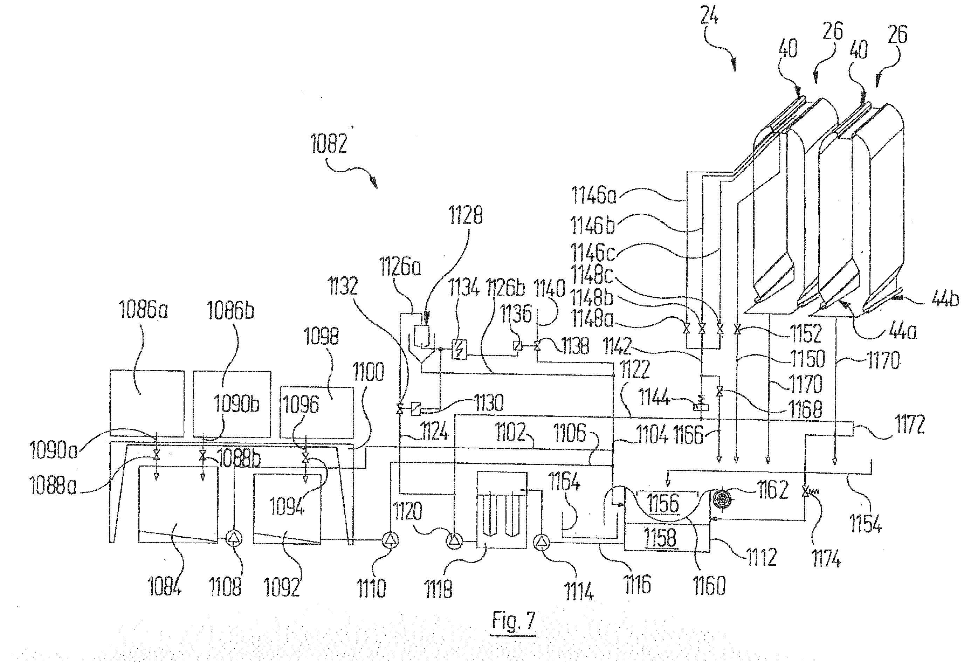

In Figur 7 ist mit 1082 insgesamt eine Anlage bezeichnet, mit welcher eine Abscheideflüssigkeit zu den Abscheideeinheiten 26 geführt wird und mit Lack-Overspraypartikeln beladene Abscheideflüssigkeit zur erneuten Verwendung wiederaufbereitet wird. Anstelle der Abscheideeinheiten 26 können auch Abscheideeinheiten 126 vorgesehen sein.

Die Anlage 1082 umfasst ein in Figur 7 links angeordnetes Reservoir 1084, in welchem eine Grundmischung der Abscheideflüssigkeit angemischt wird, welche alle Bestandteile abgesehen von dem Entklebungsmedium umfasst. Dazu kann das Reservoir 1084 fluidisch mit mehreren Gebinden verbunden werden, in welchen die Einzelkomponenten der Abscheideflüssigkeit angeliefert werden. In Figur 7 sind exemplarisch zwei solche Gebinde 1086a, 1086b gezeigt, die über mit Absperrventilen 1088a, 1088b versehene Leitungen 1090a, 1090b mit dem Reservoir 1084 verbunden sind.

Die Anlage 1082 umfasst zudem ein weiteres Reservoir 1092 für das Entklebungsmedium, welches seinerseits über eine mit einem Absperrventil 1094 versehene Leitung 1096 mit einem Gebinde 1098 verbindbar ist, in welchem das Entklebungsmedium angeliefert wird. Die Anliefergebinde 1086a, 1086b und 1098 können auf einer Laderampe 1100 abgestellt werden. Von dem Reservoir 1084 führt eine Leitung 1102 zu einer Sammelleitung 1104, welche ihrerseits über eine Leitung 1106 mit dem Entklebungsmedium-Reservoir 1092 verbunden ist. In den Leitungen 1102 und 1106 ist jeweils eine Pumpe 1108 bzw. 1110 angeordnet, durch welche der Inhalt des jeweiligen Reservoirs 1084 bzw. 1092 dosiert zur Sammelleitung 1104 gefördert werden kann.

Die Sammelleitung 1104 mündet in einen Vorlagebehälter 1112, in welchem sich das aus dem Reservoir 1084 kommende Grundmaterial und das aus dem Reservoir 1092 stammende Entklebungsmedium vereinen und durchmischen.

Der Vorlagebehälter 1112 kommuniziert seinerseits über eine mit einer Pumpe 1114 versehenen Leitung 1116 mit einem Feinfilter 1118, wie er an und für sich bekannt ist. Dieser wird von der aus dem Vorlagebehälter 1112 mittels der Pumpe 1114 geförderten Abscheideflüssigkeit durchströmt, welche ihn über eine mit einer Pumpe 1120 versehene Abgabeleitung 1122 wieder verlässt.

Stromab der Pumpe 1120 geht eine Bypassleitung 1124 ab, welche einen ersten Abschnitt 1126a, welcher zu dem Einlass eines an und für sich bekannten Viskosimeters 1128 führt, sowie einen Abschnitt 1126b aufweist, welcher von dem Auslass des Viskosimeters 1128 zur Sammelleitung 1104führt.

In dem ersten Abschnitt 1126a der Bypassleitung 1124 ist ein durch einen Elektromagneten 1130 betätigtes Ventil 1132 angeordnet, welcher durch eine ebenfalls das Viskosimeter 1128 mit Energie versorgende Energiequelle 1134 bestromt wird. Die Energiequelle 1134 dient darüber hinaus als Energieversorgung für einen Elektromagneten 1136 eines durch diesen gesteuerten Ventils 1138, welches die Sammelleitung 1104 von einer das jeweils verwendete Trägerfluid zuführenden Leitung 1140 trennt oder diese beiden Leitungen 1140, 1104 miteinander verbindet. Die Leitung 1140 steht mit einem nicht gezeigten Reservoir in Verbindung, in welchem das Trägerfluid gelagert ist. Stromab der Verbindungsstelle zur Bypassleitung 1124 ist die vom Feinfilter 1118 kommende Abgabeleitung 1122 mit einer Zuführleitung 1142 verbunden, in welcher ein federbeaufschlagtes Ventil 1144 angeordnet ist. Die Zuführleitung 1142 teilt sich in drei Leitungsarme 1146a, 1146b, 1146c auf, in welchen jeweils ein Absperrventil 1148a, 1148b, 1148c angeordnet ist. Die Leitungsarme 1146a, 1146b, 1146c führen zur Oberseite einer Abscheideeinheit 26.

Die Anlage 1082 umfasst insgesamt eine Anzahl von Zuführleitungen 1142 mit entsprechenden Leitungsarmen 1146a, 1146b, 1146c, die derjeweiligen Anzahl von Abscheideeinheiten 26 der Abscheideeinrichtung 24 entspricht.

Von der Überlaufrinne 40 jeder Abscheideeinheit 26 führt eine Entnahmeleitung 1150, welche ihrerseits ein Absperrventil 1152 aufweist, zu einer Rücklaufleitung 1154. Die Rücklaufleitung 1154 mündet in einen oberen Raum 1156 des Vorlagebehälters 1112, welcher von einem unteren Raum 1158 desselben durch ein Vliesfilter 1160 getrennt ist. Das Vliesfilter 1160 wird oberhalb des Flüssigkeitsspiegels der im Vorlagebehälter 1112 befindlichen Abscheideflüssigkeit entlanggefahren und ist dazu als von einer Rolle 1162 abwickelbares Band ausgebildet. Das abgewickelte Vliesfilter 1160 wird in einem Sammelbehälter 1164 aufgenommen. Zwischen dem Federventil 1144 und den Leitungsarmen 1146a, 1146b, 1146c ist die Zuführleitung 1142 mit einer weiteren Entnahmeleitung 1166 verbunden, in welcher ein Absperrventil 1168 angeordnet ist und welche zur Rücklaufleitung 1154 führt. Die Ablaufrinnen 44a, 44b, 144a, 144b jeder Abscheideeinheit 26 sind über eine eigene Entnahmeleitung 1170 mit der Rücklaufleitung 1154 verbunden.

Jenseits der Mündung zur Zuführleitung 1142 führt die Abgabeleitung 1122 über einen Rückführabschnitt 1172 zum unteren Raum 1158 des Vorlagebehälters 1112, wobei in dem Rückführabschnitt 1172 ein federbeaufschlagtes Absperrventil 1174 angeordnet ist.

Die oben beschriebene Anlage 1082 funktioniert nun wie folgt:
Die in den Reservoirs 1084 bzw. 1092 befindlichen Komponenten werden im gewünschten Mischungsverhältnis über die Sammelleitung 1104 in den unteren Raum 1158 des Vorlagebehälters 1112 gefördert. Die dort vorliegende Abscheideflüssigkeit umfasst neben einem frisch gemischten Anteil auch gereinigte Abscheideflüssigkeit, worauf weiter unten nochmals eingegangen wird.

Die im unteren Raum 1158 des Vorlagebehälters 1112 befindliche Abscheideflüssigkeit durchströmt den Feinfilter 1118 und wird über die Zuführleitung 1142 mit den Leitungsarmen 1146a, 1146b und 1146c zu einer jeweiligen Abscheideeinheit 26 geführt.

Mittels der Pumpe 1120 stromab des Feinfilters 1118 wird die Abscheideflüssigkeit mit einer Förderleistung gefördert, bei welcher das federbeaufschlagte Ventil 1144 in der Zuführleitung 1142 öffnet, beispielsweise mit 20 Litern pro Minute. Durch die Aufteilung der Zuführleitung 1142 in die Leitungsarme 1146a, 1146b, 1146c kann eine Feinjustierung der zur jeweiligen Abgabeeinheit 26 gelangenden Menge der Abscheideflüssigkeit vorgenommen werden. Dazu werden die Ventile 1148a, 1148b, 1148c entsprechend so geschaltet, dass entweder durch eine oder zwei oder alle drei Leitungen 1146a, 1146b, 1146c Abscheideflüssigkeit auf die Abgabeeinheit 26 abgegeben wird. Gegebenenfalls können auch mehr als drei Leitungsarme 1146 mit Ventilen 1148 vorgesehen sein. Beispielsweise verlässt die Abscheideflüssigkeit die Leitungsarme 1146a, 1146b, 1146c mit einem Durchsatz von 0,2 bis 0,3 Litern pro Meter und Minute. Der Durchsatz pro Leitungsarm 1146a, 1146b, 1146c kann über deren Durchgangsquerschnitt eingestellt werden oder indem Ventile 1148a, 1148b, 1148c verwendet werden, deren Durchgangsquerschnitt einstellbar ist.

Wenn die Förderleistung der Pumpe 1120 im Verhältnis zur Sperrwirkung des Federventils 1144 in der Zuführleitung 1142 zu groß ist, öffnet das federbeaufschlagte Absperrventil 1174 in der Rückführleitung 1172 und die Abscheideflüssigkeit wird von dem Feinfilter 1118 in einem Kreislauf zurück zum unteren Raum 1158 des Vorlagebehälters 1112 gefördert. Beispielsweise öffnet das Absperrventil 1174, wenn der Druck auf dieses 1 bar übersteigt.

Über das Viskosimeter 1128 kann die Viskosität der von dem Feinfilter 1118 kommenden Abscheideflüssigkeit gemessen werden. Dazu wird das Magnetventil 1132 geöffnet, so dass ein Teil der vom Feinfilter 1118 kommenden Abscheideflüssigkeit zum Viskosimeter 1128 gelangt. Die das Viskosimeter 1128 verlassende Abscheideflüssigkeit wird über den Leitungsabschnitt 1126b wieder der Sammelleitung 1104 und über diese wieder dem unteren Raum 1158 des Vorlagebehälters 1112 zugeführt. Wenn die Viskositätsmessung ergibt, dass die Abscheideflüssigkeit eine zu hohe Viskosität hat, kann das Magnetventil 1138 geöffnet werden, so dass das jeweilige Trägerfluid aus der Leitung 1140 in die Sammelleitung 1104 gelangt, wodurch die Abscheideflüssigkeit im Vorlagebehälter 1112 verdünnt und deren Viskosität herabgesetzt wird.

Wenn die Viskosität der Abscheideflüssigkeit zu gering ist, kann diese über eine entsprechende Veränderung der Zufuhr von Komponenten aus den Anliefergebinden erhöht werden.

Die aus den Ablaufrinnen 44a, 44b, 144a, 144b einer Abscheideeinheit 26 kommende, mit Lack-Overspraypartikeln beladene Abscheideflüssigkeit wird über die Entnahmeleitungen 1170 und die Rücklaufleitung 1154 zu dem oberen Raum 1156 des Vorlagebehälters 1112 geführt. Dort tritt sie aufgrund der Schwerkraft durch das Vliesfilter 1160 nach unten in den unteren Raum 1158 des Vorlagebehälters 1112 hindurch, in welchen sie gefiltert und weitgehend von Lack-Overspraypartikeln befreit gelangt. Dabei bleiben die von der Abscheideflüssigkeit mitgetragenen Lack-Overspraypartikel auf dem Vliesfilter 1160 zurück. Wenn der im Vorlagebehälter 1112 vorhandene Abschnitt des Vliesfilters 1160 die maximale Menge an Lack-Overspraypartikeln aufgenommen hat und ein zufriedenstellendes Filterergebnis mit einem entsprechenden Durchsatz an Abscheideflüssigkeit durch das Vliesfilter 1160 hindurch nicht mehr gewährleistet ist, wird das Vliesfilter 1160 von der Rolle 1162 abgerollt, bis ein unbeladener Abschnitt des Vliesfilters 1160 die Räume 1156 und 1158 des Vorlagebehälters 1112 voneinander trennt. Der jeweilige mit Lack-Overspraypartikeln beladene Abschnitt des Vliesfilters 1160 wird - wie oben erwähnt - im Sammelbehälter 1164 aufgenommen.

Falls die Filterwirkung des Vliesfilters 1160 im Laufe der Zeit nachlässt oder grundsätzlich nicht ausreicht, um auch Kleinstpartikel zurückzuhalten, werden diese von dem Feinfilter 1118 herausgefiltert, so dass in die Abgabeleitung 1122 nur weitgehend gereinigte und unbeladene Abscheideflüssigkeit gelangt und von dort zu den Abscheideeinheiten 26 geführt wird.

Über die Entnahmeleitungen 1150 und 1170 können die Leitungen 1142 mit den Leitungsarmen 1146a, 1146b, 1146c und die Überlaufrinne 40, 140 der jeweiligen Abscheideeinheit 26 entleert werden. Dies kann z.B. dann erforderlich sein, wenn die Abscheideflüssigkeit gewechselt werden soll.

Durch die Anlage 1082 kann Abscheideflüssigkeit in einem Kreislauf, in welchem die Abscheideeinrichtung 24 mit den Abscheideeinheiten 26 angeordnet ist, verwendet werden. Dabei ist es möglich, mit Lack-Overspraypartikeln beladene Abscheideflüssigkeit von diesen zu befreien und dem Kreislauf wieder zuzuführen.

Nachstehend werden nun Beispiele für die Zusammensetzung der Abscheideflüssigkeit angegeben, welche sich in der Praxis als geeignet erwiesen haben, wobei die Gew.%-Angaben sich auf das Gesamtgewicht der jeweiligen Abscheideflüssigkeit beziehen:

### Beispiel 1

Eine auf Wasser basierende, dünnflüssige Abscheideflüssigkeit, welche zur Abscheidung von Lösemittellacken oder 2-Komponenten-Lacken geeignet ist, hat folgende Zusammensetzung:
62 Gew.% Wasser;
35 Gew.% Monoethylenglykol;
1 Gew.% Fettalkoholethoxylat (7EO);
2 Gew.% 2-Methylpentamethylendiamin.

### Beispiel 2

Eine auf Wasser basierende, dünnflüssige Abscheideflüssigkeit, welche für die Abscheidung von wasserverdünnbaren Lacken geeignet ist, hat folgende Zusammensetzung:
62 Gew.% Wasser;
35 Gew.% Monoethylenglykol;
2 Gew.% Zinksulfat Heptahydrat;
0,7 Gew.% Fettalkoholethoxylat (7EO);
0,3 Gew.% Didecyldiammoniumchlorid.

### Beispiel 3

Eine auf Wasser basierende, viskose Abscheideflüssigkeit, welche gute Ergebnisse bei der Abscheidung von Lösemittellacken sowie von 2-Komponenten-Lacken ergeben hat, weist folgende Zusammensetzung auf:
64,25 Gew.% Wasser;
0,75 Gew.% Carboxymethylcellulose;
32 Gew.% Monoethylenglykol;
0,5 Gew.% Fettalkoholethoxylat (7EO);
2,5 Gew.% 2-Methylpentamethylendiamin.

### Beispiel 4

Eine auf Wasser basierende, viskose Abscheideflüssigkeit, welche gute Ergebnisse bei der Abscheidung von wasserverdünnbaren Lacken ergeben hat, weist folgende Zusammensetzung auf:
62 Gew.% Wasser;
35 Gew.% Monoethylenglykol;
2 Gew.% Zinksulfat Heptahydrat;
0,3 Gew.% Fettalkoholethoxylat (7EO);
0,5 Gew.% Cellulose (Natrosol 250 HHR);
0,2 Gew.% Didecyldiammoniumchlorid.

## Patentansprüche

1. Verfahren zum Entfernen von Feststoffen aus beim Lackieren von Gegenständen entstehendem Overspray, bei welchem der Overspray von einem Luftstrom aufgenommen und zu einer von einer Abscheideflüssigkeit überströmten Abscheidefläche (42a, 42b; 142a, 142b) transportiert wird, wo ein Großteil zumindest der Feststoffe in die Abscheideflüssigkeit übergeht, von dieser abtransportiert und durch Abscheiden aus der Flüssigkeit entfernt wird,
**dadurch gekennzeichnet, dass**
eine Abscheideflüssigkeit verwendet wird, welche
a) als Trägerfluid Wasser umfasst;
b) ein Entklebungsmedium umfasst, wobei Lack-Overspraypartikel durch das Entklebungsmedium entklebt werden;
c) außerdem ein oder mehrere polare, wasserlösliche Lösemittel, vorzugsweise Ethylenglykol, Propylenglykol, Polyethylenglykol oder Polypropylenglykol, umfasst;
d) polares, wasserlösliches Lösemittel in einer Menge von 1 bis 60 Gew.%, vorzugsweise von 20 bis 40 Gew.%, bezogen auf das Gesamtgewicht der Abscheideflüssigkeit, umfasst;
e) außerdem ein oder mehrere Netzmittel, bevorzugt nicht ionische, anionische oder kationische Tenside, besonders bevorzugt nicht ionische Tenside, vorzugsweise Fettalkoholethoxylate, Fettalkoholpropoxylate, umfasst;
wobei
f) die Viskosität der Abscheideflüssigkeit, gemessen mit einem Auslaufbecher gemäß DIN EN ISO 2431, Deutsche Fassung EN ISO 2431:1996, aus dem Jahre 1996 mit einer Auslauföffnung von 6 mm Durchmesser, zwischen 2 und 100 Sekunden, bevorzugt zwischen 5 und 20 Sekunden und besonders bevorzugt bei 10,5 Sekunden liegt.

2. Verfahren nach Anspruch 1, **dadurch gekennzeichnet, dass** das Entklebungsmedium ein Entklebungsmedium auf der Basis von Silicaten ist, vorzugsweise von Schichtsilicaten, Bentoniten, Sepiolithen, Tonerden; auf der Basis von Aluminium-salzen, vorzugsweise von Aluminiumsalzen, welche bei neutralen und alkalischen pH-Werten Hydroxide bilden, vorzugsweise Aluminiumsulfat, Aluminiumchlorid, Aluminiumnitrat; auf der Basis von Zinksalzen, vorzugsweise von Zinksalzen, welche bei neutralen und alkalischen pH-Werten Hydroxide bilden, vorzugsweise Zinkchlorid, Zinksulfat; auf der Basis von Eisensalzen, vorzugsweise von Eisensalzen, welche bei neutralen und alkalischen pH-Werten Hydroxide bilden, vorzugsweise Eisenchlorid, Eisensulfat; auf der Basis von Calciumsalzen, vorzugsweise Calciumchlorid, Calciumnitrat, Calciumacetat; auf der Basis von Zirkoniumsalzen, vorzugsweise Zirkoniumchlorid, Zirkoniumacetat; auf der Basis von Polymeren, vorzugsweise von Polyacrylamiden, Polymethacrylamiden oder Melamin/Formaldehyd-Kondensationsprodukten; oder auf der Basis von Aminen, vorzugsweise von Diaminen, vorzugsweise von 2-Methylpentamethylendiamin, Ethylendiamin.

3. Verfahren nach Anspruch 2, **dadurch gekennzeichnet, dass** die Abscheideflüssigkeit das Entklebungsmedium in einer Menge von 0,1 bis 20 Gew.%, bevorzugt von 1 bis 5 Gew.%, bezogen auf das Gesamtgewicht der Abscheideflüssigkeit, umfasst.

4. Verfahren nach einem der Ansprüche 1 bis 3, **dadurch gekennzeichnet, dass** die Abscheideflüssigkeit Netzmittel in einer Menge von 0,1 bis 5 Gew.%, bezogen auf das Gesamtgewicht der Abscheideflüssigkeit, umfasst.

5. Verfahren nach einem der Ansprüche 1 bis 4, **dadurch gekennzeichnet, dass** die Abscheideflüssigkeit außerdem Verdickungsmittel, bevorzugt Cellulose, Carboxymethylcellulose, Methylethylcellulose, Hydroxypropylcellulose, Hydroxypropylethylcellulose, Polyysaccharide, Gummi arrabicum, Xanthan oder modifizierte Stärke, besonders bevorzugt Carboxymethylcellulose, umfasst.

6. Verfahren nach Anspruch 5, **dadurch gekennzeichnet, dass** die Abscheideflüssigkeit Verdickungsmittel in einer Menge von 0,1 bis 5 Gew.%, bevorzugt von 0,1 bis 1 Gew.%, bezogen auf das Gesamtgewicht der Abscheideflüssigkeit, umfasst.

7. Verfahren nach einem der Ansprüche 1 bis 6, **dadurch gekennzeichnet, dass** die Abscheideflüssigkeit außerdem Konservierungsmittel, vorzugsweise Isothiazoline; quarternäre Ammoniumverbindungen, wie Didecyldiammoniumchlorid, Dioctyldiammoniumchlorid; Dimethyloldimethylhydantoin; Bromochlorodimethylhydantoin oder Bisoxazolidin; vorzugsweise in einer Menge von 0,5 bis 10 Gew.%, bezogen auf das Gesamtgewicht der Abscheideflüssigkeit, umfasst.

8. Verfahren nach einem der vorhergehenden Ansprüche, **dadurch gekennzeichnet, dass** die Abscheideflüssigkeit elektrisch leitend ist und Lack-Overspray mittels einer Elektrodeneinrichtung (56, 156) ionisiert und an der Abscheidefläche (42a, 42b; 142a, 142b) abgeschieden wird, indem die Elektrodeneinrichtung (56, 156) mit dem ersten Pol einer Hochspannungsquelle (74; 174) und die Abscheidefläche (42a, 42b; 142a, 142b) mit dem zweiten Pol der Hochspannungsquelle (74; 174) verbunden ist.

9. Verfahren nach einem der vorhergehenden Ansprüche, **dadurch gekennzeichnet, dass** das Trägerfluid und das Entklebungsmedium einem Vorlagebehälter (1112) unabhängig voneinander zugeführt werden.

10. Verfahren nach einem der vorhergehenden Ansprüche, **dadurch gekennzeichnet, dass** mit Lack-Overspray beladene Abscheideflüssigkeit wiederaufbereitet und wiederverwendet wird.

11. Verfahren nach Anspruch 10, **dadurch gekennzeichnet, dass** die Wiederaufbereitung durch Filtern erfolgt, welches wenigstens eine Filterstufe (1118; 1160) umfasst.

12. Verfahren nach einem der vorhergehenden Ansprüche, **dadurch gekennzeichnet, dass** die Viskosität der der Abscheidefläche (42a, 42b; 142a, 142b) zugeführten Abscheideflüssigkeit gemessen wird.

## Claims

1. A method for the removal of solids from overspray arising when articles are painted, in which the overspray is taken up by an air stream and transported to a separating surface (42a, 42b; 142a, 142b) over which a separating liquid flows, where a majority of at least the solids is transferred to the separating liquid, is transported away thereby and is removed from the liquid by being separated off,
**characterized in that**
a separating liquid is used, which
a) includes water as a carrier fluid;
b) includes a detackifying medium, wherein paint overspray particles are detackified by the detackifying medium;
c) further includes one or more polar water-soluble solvents, preferably ethylene glycol, propylene glycol, polyethylene glycol or polypropylene glycol;
d) includes a polar water-soluble solvent in a quantity of 1 to 60 weight %, preferably of 20 to 40 weight %, in relation to the total weight of the separating liquid;
e) further includes one or more wetting agents, preferably non-ionic, anionic or cationic surfactants, particularly preferably non-ionic surfactants, preferably fatty alcohol ethoxylates or fatty alcohol propoxylates,
wherein
f) the viscosity of the separating liquid, as measured using a flow cup according to DIN EN ISO 2431, German version EN ISO 2431:1996, dating from 1996, with an outflow opening of 6mm in diameter, is between 2 and 100 seconds, preferably between 5 and 20 seconds, and particularly preferred 10.5 seconds

2. A method according to Claim 1, **characterized in that** the detackifying medium is a detackifying medium on the basis of silicates, preferably phyllosilicates, bentonites, sepiolites, clays; on the basis of aluminum salts, preferably aluminum salts which form hydroxides at neutral and alkaline pH values, preferably aluminum sulfate, aluminum chloride, aluminum nitrate; on the basis of zinc salts, preferably zinc salts which form hydroxides at neutral and alkaline pH values, preferably zinc chloride, zinc sulfate; on the basis of iron salts, preferably iron salts which form hydroxides at neutral and alkaline pH values, preferably iron chloride, iron sulfate; on the basis of calcium salts, preferably calcium chloride, calcium nitrate, calcium acetate; on the basis of zirconium salts, preferably zirconium chloride, zirconium acetate; on the basis of polymers, preferably polyacrylamides, polymethacrylamides or melamine/formaldehyde condensation products; or on the basis of amines, preferably diamines, preferably 2-methyl pentamethylene diamine, ethylene diamine.

3. A method according to Claim 2, **characterized in that** the separating liquid includes the detackifying medium in a quantity of 0.1 to 20 weight %, preferably of 1 to 5 weight %, in relation to the total weight of the separating liquid.

4. A method according to one of Claims 1 to 3, **characterized in that** the separating liquid includes wetting agents in a quantity of 0.1 to 5 weight % in relation to the total weight of the separating liquid.

5. A method according to one of Claims 1 to 4, **characterized in that** the separating liquid further includes thickeners, preferably cellulose, carboxymethyl cellulose, methyl ethyl cellulose, hydroxypropyl cellulose, hydroxypropyl ethyl cellulose, polysaccharides, gum arabic, xanthan gum or modified starch, particularly preferred carboxymethyl cellulose.

6. A method according to Claim 5, **characterized in that** the separating liquid includes thickeners in a quantity of 0.1 to 5 weight %, preferably of 0.1 to 1 weight %, in relation to the total weight of the separating liquid.

7. A method according to one of Claims 1 to 6, **characterized in that** the separating liquid further includes preservatives, preferably isothiazoline; quaternary ammonium compounds, such as didecyl diammonium chloride, dioctyl diammonium chloride; dimethylol dimethyl hydantoin; bromochlorodimethyl hydantoin or bisoxazolidine; preferably in a quantity of 0.5 to 10 weight % in relation to the total weight of the separating liquid.

8. A method according to one of the preceding Claims, **characterized in that** the separating liquid is electrically conductive and paint overspray is ionized using an electrode assembly (56, 156) and is separated off at the separating surface (42a, 42b; 142a, 142b) by the electrode assembly (56, 156) being connected to the first pole of a high-voltage source (74; 174) and the separating surface (42a, 42b; 142a, 142b) being connected to the second pole of the high-voltage source (74; 174).

9. A method according to one of the preceding Claims, **characterized in that** the carrier fluid and the detackifying medium are supplied to a storage container (1112) independently of one another.

10. A method according to one of the preceding Claims, **characterized in that** the separating liquid laden with paint overspray is reprepared and reused.

11. A method according to Claim 19, **characterized in that** the repreparation is performed by means of filtering including at least one filter stage (1118; 1160).

12. A method according to one of the preceding Claims, **characterized in that** the viscosity of the separating liquid supplied to the separating surface (42a, 42b; 142a, 142b) is measured.

## Revendications

1. Procédé d'élimination de substances solides dissociées d'avec un excédent de pulvérisation engendré au cours du laquage d'objets, dans lequel ledit excédent de pulvérisation est absorbé par un courant d'air et est transporté vers une surface séparatrice (42a, 42b ; 142a, 142b) balayée en surplomb par un liquide de séparation, sur laquelle au moins une grande part des substances solides migre dans ledit liquide de séparation, est évacuée par ce dernier et est éliminée par séparation d'avec ledit liquide,
**caractérisé par**
l'utilisation d'un liquide de séparation qui
a) renferme de l'eau en tant que fluide porteur ;
b) renferme un agent de dénaturation, des particules d'excédent de pulvérisation de laque étant dénaturées par ledit agent de dénaturation ;
c) renferme, en outre, un ou plusieurs solvant(s) polaire(s) hydrosoluble(s), de préférence de l'éthylène glycol, du propylène glycol, du polyéthylène glycol ou du polypropylène glycol ;
d) renferme du solvant polaire hydrosoluble en une quantité de 1 à 60 % en poids, préférentiellement de 20 à 40 % en poids rapportée au poids total dudit liquide de séparation ;
e) renferme, par ailleurs, un ou plusieurs agent(s) de mouillage, de préférence des tensioactifs non ioniques, anioniques ou cationiques, des tensioactifs non ioniques avec préférence particulière, préférentiellement des éthoxylates d'alcools gras, des propoxylates d'alcools gras ;
sachant que
f) la viscosité dudit liquide de séparation, mesurée à l'aide d'un conteneur de sortie conforme à la norme DIN EN ISO 2431, version allemande EN ISO 2431 :1996 de l'année 1996, muni d'un orifice d'écoulement de 6 mm de diamètre, se situe entre 2 et 100 secondes, de préférence entre 5 et 20 secondes , et avoisine 10,5 secondes avec préférence particulière.

2. Procédé selon la revendication 1, **caractérisé par le fait que** l'agent de dénaturation est un agent de dénaturation à base de silicates, préférentiellement de phyllosilicates, de bentonites, de sépiolithes, d'argiles ; à base de sels d'aluminium, préférentiellement de sels d'aluminium formant des hydroxydes à des valeurs de pH neutres et alcalines, de préférence du sulfate d'aluminium, du chlorure d'aluminium, du nitrate d'aluminium ; à base de sels de zinc, préférentiellement de sels de zinc formant des hydroxydes à des valeurs de pH neutres et alcalines, de préférence du chlorure de zinc, du sulfate de zinc ; à base de sels de fer, préférentiellement de sels de fer formant des hydroxydes à des valeurs de pH neutres et alcalines, de préférence du chlorure de fer, du sulfate de fer; à base de sels de calcium, de préférence du chlorure de calcium, du nitrate de calcium, de l'acétate de calcium ; à base de sels de zirconium, de préférence du chlorure de zirconium, de l'acétate de zirconium ; à base de polymères, préférentiellement de polyacrylamides, de polyméthacrylamides ou de produits de condensation de mélamine/formaldéhyde ; ou à base d'amines, préférentiellement de diamines, de préférence de 2-méthyl pentaméthylène diamine, d'éthylène diamine.

3. Procédé selon la revendication 2, **caractérisé par le fait que** le liquide de séparation renferme l'agent de dénaturation en une quantité de 0,1 à 20 % en poids, préférentiellement de 1 à 5 % en poids rapportée au poids total dudit liquide de séparation.

4. Procédé selon l'une des revendications 1 à 3, **caractérisé par le fait que** le liquide de séparation renferme des agents de mouillage en une quantité de 0,1 à 5 % en poids rapportée au poids total dudit liquide de séparation.

5. Procédé selon l'une des revendications 1 à 4, **caractérisé par le fait que** le liquide de séparation renferme en outre des agents épaississants, préférentiellement de la cellulose, de la carboxyméthylcellulose, de la méthyléthylcellulose, de l'hydroxypropylcellulose, de l'hydroxypropyléthylcellulose, des polysaccharides, de la gomme arabique, de la gomme xanthane ou de l'amidon modifié, de la carboxyméthylcellulose avec préférence particulière.

6. Procédé selon la revendication 5, **caractérisé par le fait que** le liquide de séparation renferme des agents épaississants en une quantité de 0,1 à 5 % en poids, préférentiellement de 0,1 à 1 % en poids rapportée au poids total dudit liquide de séparation.

7. Procédé selon l'une des revendications 1 à 6, **caractérisé par le fait que** le liquide de séparation renferme par ailleurs des agents conservateurs, préférentiellement des isothiazolines ; des composés d'ammonium quaternaire tels que le chlorure de didécyldimonium, le chlorure de dioctyldimonium ; la diméthylol dyméthyl hydantoïne ; la bromochloro dyméthyl hydantoïne ou une bisoxazolidine ; de préférence en une quantité de 0,5 à 10 % en poids rapportée au poids total dudit liquide de séparation.

8. Procédé selon l'une des revendications précédentes, **caractérisé par le fait que** le liquide de séparation est électriquement conducteur, de l'excédent de pulvérisation de laque étant ionisé au moyen d'un dispositif à électrodes (56, 156) et étant séparé sur la surface séparatrice (42a, 42b ; 142a, 142b), sachant que ledit dispositif à électrodes (56, 156) est raccordé au premier pôle d'une source (74 ; 174) de haute tension, et que ladite surface séparatrice (42a, 42b ; 142a, 142b) est connectée au second pôle de ladite source (74 ; 174) de haute tension.

9. Procédé selon l'une des revendications précédentes, **caractérisé par le fait que** le fluide porteur et l'agent de dénaturation sont délivrés, indépendamment l'un de l'autre, à un conteneur de sortie (1112).

10. Procédé selon l'une des revendications précédentes, **caractérisé par le fait que** du liquide de séparation, chargé d'excédent de pulvérisation de laque, est recyclé et réutilisé.

11. Procédé selon la revendication 10, **caractérisé par le fait que** le recyclage s'opère par une filtration incluant au moins un étage de filtration (1118 ; 1160).

12. Procédé selon l'une des revendications précédentes, **caractérisé par** une mesure de la viscosité du liquide de séparation délivré à la surface séparatrice (42a, 42b ; 142a, 142b).
